# EUROPÄISCHE PATENTSCHRIFT

(11) **EP 1 687 239 B1**
(45) Veröffentlichungstag und Bekanntmachung des Hinweises auf die Patenterteilung: **11.04.2007**
(21) Anmeldenummer: 04797914.1
(22) Anmeldetag: 16.11.2004
(51) Int. Cl.: C01B 31/34, C04B 35/628, E21B 10/56

(54) **DUALPHASENHARTSTOFF, VERFAHREN ZU SEINER HERSTELLUNG UND DESSEN VERWENDUNG**
DUAL-PHASE HARD MATERIAL, METHOD FOR THE PRODUCTION THEREOF AND ITS USE
MATERIAU DUR A PHASE DOUBLE, PROCEDE PERMETTANT DE LE PRODUIRE ET UTILISATION CORRESPONDANTE

(30) Priorität: 21.11.2003 DE 10354543
(43) Veröffentlichungstag der Anmeldung: 09.08.2006
(73) Patentinhaber: H.C. Starck GmbH & Co. KG, 38642 Goslar (DE)
(72) Erfinder: GERK, Christian, 38729 Wallroden (DE); WERNICKE, Klaus-Dieter, 79713 Bad Säckingen (DE)
(74) Vertreter: Clauswitz, Kai-Uwe Wolfram
(86) Internationale Anmeldenummer: PCT/EP2004/012959
(87) Internationale Veröffentlichungsnummer: WO 2005/049490

(56) Entgegenhaltungen:
- DE-A1- 3 626 031
- US-A- 3 848 062
- US-A- 5 942 204
- NAYAK B B: "Enhancement in the microhardness of arc plasma melted tungsten carbide" JOURNAL OF MATERIALS SCIENCE KLUWER ACADEMIC PUBLISHERS USA, Bd. 38, Nr. 12, 15. Juni 2003 (2003-06-15), Seiten 2717-2721, XP002318190 ISSN: 0022-2461

## Beschreibung

Die Erfindung betrifft Wolframcarbidpulver aus Pulverpartikeln, die einen Kern aus Wolframschmelzcarbid und eine Hülle aus Wolframmonocarbid aufweisen, deren Herstellung und deren Verwendung für verschleißbeanspruchte Bauteile oder deren Beschichtung.

Hartstoffe, insbesondere Wolframcarbide, werden aufgrund ihrer Härte und Widerstandsfähigkeit vielfältig eingesetzt. Beispielsweise werden Schichten, die diese Hartstoffe enthalten, auf Werkzeuge, beispielsweise Baggerschaufeln aufgebracht, um diesen Werkzeugen eine hohe Verschleißfestigkeit und Zähigkeit gegenüber Reibung und Schlag zu verleihen.

Aus der Gruppe der Wolframcarbide werden technisch das Wolframmonocarbid (WC) und das sogenannte Wolframsclnnelzcarbid (WSC) eingesetzt. Beim WSC handelt es sich um ein eutektisches Gemisch aus WC und Diwolframcarbid (W₂C), wobei das durchschnittliche Kohlenstoff-Massenverhältnis in der Regel zwischen 3,8 und 4,2 Gew.-% liegt. Dies entspricht einer Phasenverteilung von 73-80 Gew.-% W₂C und 20-27 Gew.-% WC. WSC weist ein sehr feinkörniges Kristallgefüge auf, das oftmals als Federstruktur beschrieben wird, und durch schnelles Abschrecken einer Carbidschmelze erhalten wird.

Aus US-A 4,834,963 ist die Herstellung von sogenanntem makrokristallinern WC (mWC) bekannt. Dieses wird aluminothermisch hergestellt und zeichnet sich insbesondere durch einen sehr geringen Gehalt an Verunreinigungen aus. Durch Zugabe von metallischem Eisen in die Ausgangsmischung verläuft der Herstellprozess in einem gewünschten Temperaturbereich. mWC wird aufgrund seiner Korngröße in vielen Bereichen anstelle von WSC eingesetzt. Im Vergleich zu WSC weist mWC jedoch eine deutlich niedrigere Härte und Zähigkeit auf.

Für die Herstellung von WSC sind verschiedene Verfahren bekannt, die sich im wesentlichen in der Art der Wärmezufuhr und -abfuhr unterscheiden. DE 36 26 031 A1 beschreibt die Herstellung von WSC in einem elektrischen Lichtbogen. Es wird WSC mit einem Kohlenstoffgehalt von 3,5 bis 4,2 Gew.-% und einer feinnadeligen Gefügestruktur erhalten. Die Härte HV0,4 wird mit 2100 bis 2400 angegeben. Das WSC wird klassischen Aufbereitungstechniken wie Brechen und Sieben unterworfen, so dass gebrochenes, fraktioniertes WSC erhalten wird.

Aus EP 238 425 B1, DE 199 45 318 A1 und EP 687 650 A1 sind verschiedene Verfahren zur Herstellung von WSC bekannt, das sich durch eine sphärische Partikelmorphologie auszeichnet. Sphärisches WSC (sWSC) hat neben einer extrem hohen Härte von über 3000 HV0,1 aufgrund seiner Morphologie Vorteile gegenüber gebrochenem WSC, beispielsweise bezüglich der Vermeidung von Spannungsspitzen unter Last.

Bei der Verarbeitung von WSC zur Herstellung von Verschleißschutzschichten oder Bauteilen wird das WSC üblicherweise mit einer pulverförmigen metallischen Legierung auf Basis von Fe, Ni oder Co vermischt und unter Wärmeeinwirkung verarbeitet. Bei der Herstellung von Bohrköpfen kann ein Matrixmetall, z.B. Cu, auch durch Infiltration zugeführt werden. Es ist jedoch in jedem Fall eine Wärmebehandlung notwendig. Durch das Schmelzen und Wiedererstarren des Matrixmetalls wird der Hartstoff gleichmäßig in der duktilen metallischen Matrix verteilt und fest eingebettet.

Ein großer Nachteil von WSC liegt darin, dass das WSC im Verlaufe der bei der Einbettung in ein Matrixmetall notwendigen Wärmebehandlung vom Metall zum Teil aufgelöst wird (B. Z. Li et. al.: Acta. Met., Vol. 12, No. 4, 566-572 (1999), F. Schreiber: Ziegelindustrie International, 55(6), 12-17 (2002), I. Aydin et. al.: DVS-Bericht 175, 137-142 (1996)). Somit sinkt der Anteil an nutzbarem Hartstoff und die als Matrixmaterial eingesetzte Metalllegierung wird durch Anreicherung von Wolfram und Kohlenstoff irreversibel verändert. Einer einfachen Erhöhung des Anteils an Hartstoff in der zu verarbeitenden Hartstoff Matrixmetall-Mischung sind verarbeitungsseitig deutliche Grenzen gesetzt. Aufgrund des Fließverhaltens der Mischung überschreitet der Anteil an Hartstoff im Gemisch mit dem Matrixmetall bei Schweißanwendungen 60 Gew.-% üblicherweise nicht.

Erschwerend kommt hinzu, dass die Menge an aufgelöstem WSC mit steigender Behandlungstemperatur sowie der Dauer der Wärmeeinwirkung steigt. Um die Auswirkungen zu verdeutlichen, sei als Beispiel die Handschweißung einer Verschleißschutzschicht genannt. Die lokale Qualität der erzeugten Schicht ist unmittelbar abhängig vom Können, der Konstanz und Ausdauer des Bedieners der zum Schweißen eingesetzten Vorrichtung, da dieser die Intensität und Dauer der Wärmebehandlung beeinflusst. Auch bei Maschinenschweißungen oder ähnlich standardisierten Prozessen wirkt sich die Auflösung des WSC negativ aus. Beispielsweise können die Temperatur für die Wärmebehandlung und die Schweißgeschwindigkeit nur in engen Grenzen gewählt werden, um ein zu starkes oder gar vollständiges Auflösen des WSC zu vermeiden.

Die Auflösung des WSC kann den Matrixwerkstoff erheblich verändern. Durch die Lösung von Kohlenstoff und Wolfram im Metall kommt es z.B. zur unkontrollierten Ausscheidung spröder Karbidphasen, welche die Duktilität der Matrix herabsetzen und die Rissbildung fördern. Auch für Matrixlegierungen mit geringem Anteil an zusätzlichen Karbidbildnern ist die Auflösung des WSC nachteilig, da der nutzbare Anteil an Hartstoff in jedem Fall herabgesetzt wird. Bei der Verwendung von Fe-Basislegierungen kann die Anreicherung von Kohlenstoff die Ausscheidung von Austenit bewirken, welcher schlechtere Verschleißeigenschaften aufweist als die gewünschte ferritische Phase.

Eine Vielzahl technischer Entwicklungen zielen indirekt auf die Bekämpfung der Auflösung des eingesetzten Hartstoffs bei der Herstellung von Verschleißschutzschichten ab. So werden z.B. Matrixlegierungen mit geringem Schmelzpunkt, Matrixlegierungen mit geringem Anteil an Karbidbildnern oder Envärmungsverfahren mit hoher Prozesskonstanz bezüglich der Temperatur (Plasma Transferred Arc (PTA), Laser) eingesetzt. Das prinzipielle Problem der hohen Löslichkeit von WSC in vielen Matrixmetallen lässt sich hierdurch jedoch nicht beseitigen.

Aufgabe der vorliegenden Erfindung war es daher, ein Wolframcarbid zur Verfügung zu stellen, welches sich durch hohe chemische Beständigkeit, insbesondere in einer Metallschmelze, und gleichzeitig durch eine hohe Härte und Zähigkeit auszeichnet.

Die Aufgabe wird durch ein Wolframcarbidpulver gelöst, das einen Kern aus WSC aufweist, der von einer dichten Hülle aus WC umgeben ist.

Die Erfindung betrifft daher Wolframcarbidpulver, wobei die Pulverpartikel einen Kern aus Wolframschmelzcarbid und eine Hülle aus Wolfranunonocarbid aufweisen.

Der erfindungsgemäße Hartstoff, im Folgenden abgekürzt mit "cWSC", lässt sich erhalten, indem WSC durch Aufkohlung bis zu einer gewünschten Tiefe in WC umgewandelt wird, und kann beispielsweise zur Herstellung von Verschleißschutzschichten und verschleißfesten Bauteilen eingesetzt werden.

Das erfindungsgemäße cWSC zeichnet sich insbesondere dadurch aus, dass die überragende Zähigkeit und Härte des WSC im Kern des WC/WSC-Verbundes auch dann erhalten bleibt, wenn es in üblicher Weise verarbeitet, d.h. mit einem flüssigen Matrixmaterial in Kontakt gebracht wird.

Das erfindungsgemäße Wolframcarbidpulver weist vorzugsweise einen Gehalt an gebundenem Kohlenstoff von 4 bis 6 Gew.-%, insbesondere bevorzugt von 4,5 bis 5,5 Gew.-% und ganz besonders bevorzugt von 4,3 bis 4,8 Gew.-% auf. Der Gehalt an freiem Kohlenstoff sollte 0,1 Gew.% nicht überschreiten.

Ist der Gehalt an gebundenem Kohlenstoff kleiner als 4 Gew.-%, so bildet sich keine ausreichend dichte WC-Hülle aus, so dass keine Steigerung der chemischen Beständigkeit im Vergleich zu WSC zu beobachten ist. Nähert sich der Gehalt an gebundenem Kohlenstoff dem Grenzwert 6,13 Gew.-% entsprechend reinem WC, so wird der WSC-Kern so klein, dass gegenüber reinem WC keine Steigerung der Härte mehr erreicht wird.

Die vorteilhaften Eigenschaften des erfindungsgemäßen Wolframcarbidpulvers bleiben auch dann erhalten, wenn es einen geringen Anteil an WC-Partikeln aufweist, d.h. nicht alle Pulverpartikel aus einem Kern aus WSC und einer WC-Hülle aufgebaut sind. Solche Wolframcarbidpulver sind daher ebenfalls erfindungsgemäß. Vorzugsweise weisen jedoch mindestens 90 % der Pulverpartikel einen Kern aus WSC und eine WC-Hülle auf, insbesondere bevorzugt mindestens 95 %, ganz besonders bevorzugt mindestens 99 %.

Die mittlere Partikelgröße kann in einem weiten Bereich variieren und richtet sich insbesondere nach der geplanten Verwendung des cWSC. Die Partikelgröße bestimmt mittels RoTap-Siebanalyse gemäß ASTM B 214 kann beispielsweise bis 3000 µm betragen. Soll das cWSC zur Herstellung von Verschleißschutzschichten unter Einsatz des PTA-Verfahrens eingesetzt werden, hat sich eine Partikelgrößenfraktion bestimmt mittels RoTap-Siebanalyse gemäß ASTM B 214 von 40 bis 160 µm als vorteilhaft erwiesen. Die Einstellung der mittleren Partikelgröße kann beispielsweise durch Wahl eines WSC-Pulvers mit bestimmter mittleren Partikelgröße als Edukt zur Herstellung des cWSC erfolgen. Es ist aber beispielsweise auch möglich, aus bereits hergestelltem cWSC bestimmte Kornfraktionen zu mischen oder abzutrennen, beispielsweise durch Sieben oder Sichten.

Im erfindungsgemäßen Wolframcarbidpulver ist der WSC-Kern von einer dichten Hülle aus Wolfraymonocarbid umgeben. Die Dicke der Hülle, bestimmt mittels Lichtmikroskopie am geätzten Material, beträgt vorzugsweise das 0,05 bis 0,4-fache der mittleren Partikelgröße bestimmt mittels RoTap-Siebanalyse gemäß ASTM B 214, insbesondere bevorzugt das 0,05 bis 0,15-fache.

cWSC weist eine ausgezeichnete Härte auf. Vorzugsweise beträgt die Härte nach Vickers >2000 HV0,1, insbesondere bevorzugt von >2500 HV0,1.

Die Einstellung der Morphologie der Partikel kann beispielsweise durch Einsatz eines geeigneten WSC-Pulvers erfolgen.

Das erfindungsgemäße Wolframcarbidpulver kann demnach verschiedene Morphologien aufweisen, beispielsweise scharfkantig gebrochen oder sphärisch. Die sphärische Morphologie bietet prinzipiell Vorteile bezüglich der Verschleißfestigkeit, ist allerdings in der Herstellung aufwändiger als Pulver mit unregelmäßiger Morphologie.

Gegenstand der Erfindung ist weiterhin ein Verfahren zur Herstellung des erfindungsgemäßen Wolframcarbids (cWSC), wobei Wolframschmelzcarbidpulver in Gegenwart einer Kohlenstoffquelle auf eine Temperatur von 1300 bis 2000°C, vorzugsweise von 1400 bis 1700°C erhitzt wird.

Das erfindungsgemäße Verfahren kann in Gegenwart von Inertgas, in Gegenwart von Reaktivgas oder im Vakuum durchgeführt werden. Vorzugsweise wird in Gegenwart von Wasserstoff gearbeitet.

Als Reaktivgas eignet sich insbesondere eine gasförmige Kohlenstoffquelle, beispielsweise Kohlenmonoxid, ein CO-/CO₂-Gemisch, ein Kohlenwasserstoff oder ein Kohlenwasserstoffgemisch, wie etwa Erdgas.

Als Kohlenstoffquelle kommen gasförmige und feste Kohlenstoffquellen in Betracht. Als feste Kohlenstoffquelle können beispielsweise Russ oder Graphit eingesetzt werden. Es ist natürlich auch möglich, Mischungen verschiedener gasförmiger und/oder fester Kohlenstoffquellen einzusetzen.

Durch die Temperaturbehandlung von WSC in Gegenwart der Kohlenstoffquelle kommt es an der Oberfläche zu einer Umwandlung von W₂C zu WC. Es bildet sich also um das WSC eine dichte WC-Schicht aus.

Temperatur, Umsetzungszeit und die Menge an zugesetzter Kohlenstoffquelle sind so zu wählen, dass sich die Hülle an WC in gewünschter Dicke ausbildet. Es ist dabei darauf zu achten, dass im Inneren der Partikel WSC erhalten bleibt. Die einzuhaltenden Bedingungen werden im Wesentlichen durch die Partikelgröße und Partikelform des eingesetzten WSC-Pulvers bestimmt und lassen sich anhand einfacher Versuchsreihen bestimmen. Wird der Kohlenstoffgehalt zu hoch eingestellt, steigert dies die zur Umsetzung benötigte Zeit und Temperatur und verringert den Anteil des federförmigen Gefüges, d.h. den Anteil an WSC unnötig.

Es hat sich als vorteilhaft erwiesen, die Kohlenstoffquelle in einer solchen Menge zuzugeben, dass der Gesamtkohlenstoffgehalt in der Reaktionsmischung, d.h. die Summe der Kohlenstoffgehalte von WSC und Kohlenstoffquelle, 4 bis 6 Gew.-%, vorzugsweise 4,3 bis 5,5 Gew.-% beträgt.

Bei der Umsetzung von WSC mit Pulverpartikeln stark unterschiedlicher Korngrößen können feinere Kornfraktionen im Verhältnis zu ihrem Korndurclimessers stärker carburiert werden als grobe Körner. Die trifft vor allem für Pulver mit hohem Feinanteil < 45 µm zu und kann durch vorherige Abtrennung des Feinanteils und getrennte Umsetzung der verschiedenen Pulverfraktionen verhindert werden.

Die Umsetzungszeiten können beispielsweise 1 bis 10 Stunden, vorzugsweise 1,5 bis 7 Stunden betragen.

Zur Herstellung des erfindungsgemäßen Wolframcarbids kann also beispielsweise von gebrochenem oder sphärischem WSC ausgegangen werden, das auf die gewünschte Korngröße abgesiebt wird. Das Material wird anschließend mit einer Kohlenstoffquelle, z.B. Ruß, in der gewünschten Menge intensiv vermengt, einer Wärmebehandlung unterzogen und dabei am Rand aufgekohlt. Zur Wärmebehandlung sind z.B. konventionelle Durchschuböfen oder vergleichbare Aggregate geeignet, die beispielsweise im Temperaturbereich zwischen 1550 und 1900°C unter Wasserstoffatmosphäre oder Schutzgas betrieben werden können. Das Gemisch aus WSC und Ruß wird beispielsweise in Graphitschiffchen eingefüllt. Bei der Umsetzung reagiert der Kohlenstoff mit dem im WSC vorhandenen W₂C und wandelt dieses in WC um, welches von dem bereits vorhandenen WC nicht mehr zu unterscheiden ist. Der dadurch entstehende WC-Saum bildet eine natürliche Diffusionsbarriere für den Kohlenstoff, so dass die gewünschte Aufkohlungstiefe über die Parameter Zeit und Temperatur gesteuert werden kann.

Erfindungsgemäßes cWSC kann in üblicher Weise durch Sintern, Spritzen, Schweißen, Infiltrieren, Schleudern oder sonstige Verfahren, die sich zur Herstellung eines dichten Verbundwerkstoffs eignen, verarbeitet werden. Es eignet sich hervorragend zur Herstellung von Oberflächenbeschichtungen verschleißbeanspruchter Bauteile. Dazu wird cWSC in der Regel mit einem Matrixmetall, beispielsweise einer Legierung auf Basis von Fe, Ni oder Co vermischt und anschließend mittels der genannten Verfahren, insbesondere durch Schweißen, auf die zu schützende Oberfläche aufgebracht.

Gegenstand der Erfindung ist daher auch die Verwendung der erfindungsgemäßen Wolframcarbidpulver zur Oberflächenbeschichtung verschleißbeanspruchter Bauteile und zur Herstellung von Bohrkronen.

Die folgenden Beispiele dienen der näheren Erläuterung der Erfindung, wobei die Beispiele das Verständnis des erfindungsgemäßen Prinzips erleichtern sollen, und nicht als Einschränkung desselben zu verstehen sind.

### Beispiele

Der Gehalt an gesamtem Kohlenstoff wurde durch Verbrennung der Probe im Sauerstoffstrom und Wärmeleitfähigkeits-Detektion, der Gehalt an freiem Kohlenstoff durch Säureaufschluss (HF/HNO₃/H₃PO₄) und anschließende nichtdispersive Infrarot-Absorption nach Verbrennung im Sauerstoffstrom bestimmt. Der Gehalt an gebundenem Kohlenstoff entspricht der Differenz aus gesamtem und freiem Kohlenstoff.

### Beispiel 1

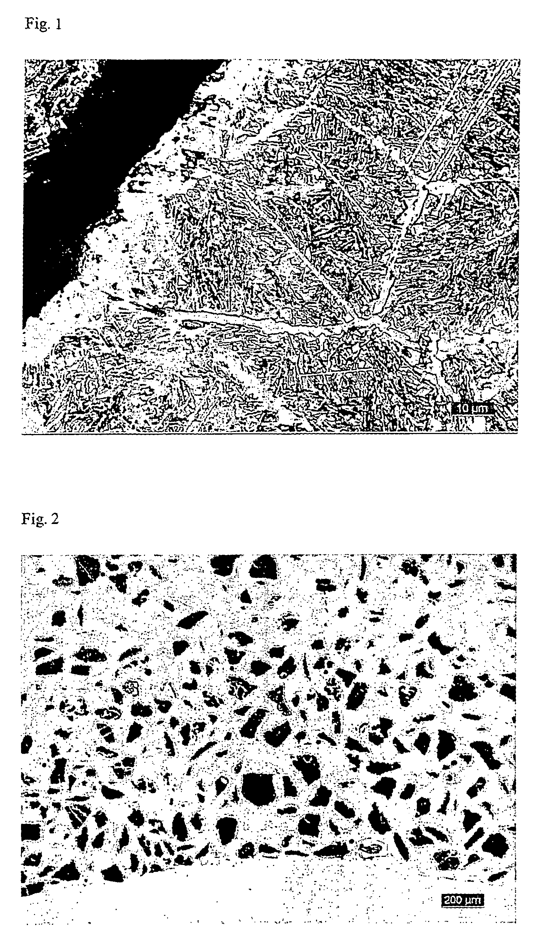

WSC der Körnung -150 +45µm mit ca. 3,94 Gew.-% gebundenem und 0,035 Gew.-% freiem Kohlenstoff wurde mit Ruß (spezifische Oberfläche nach BET: 10 m²/g) vermischt. Die Menge an zugesetztem Ruß wurde so gewählt, dass sich ein Gesamtkohlenstoffgehalt von C_{gesamt} = 5,7 Gew.-% ergab. Das Gemisch wurde in Graphitschiffchen eingefüllt und 2h bei 1550°C unter Wasserstoff in einem Durchschubofen geglüht. Das entstandene cWSC wurde im Querschliff präpariert, zur Sichtbarmachung der Phasenzusammensetzung geätzt und im Auflichtmikroskop untersucht. Eine mikroskopische Aufnahme (1000-fache Vergrößerung) ist in Fig. 1 wiedergegeben.

Die groben Partikel haben nach der Aufkohlung einen ca. 15µm starken Rand aus WC, der in Fig. 1 als helle Randschicht erkennbar ist. Partikel mit einem großen Längen-Breite-Verhältnis (aspectratio), d.h. länglich geformte Partikel, sind teilweise vollständig durchgekohlt. Das Endprodukt wies 5,26 Gew.-% gebundenen Kohlenstoff und 0,41 Gew.-% freien Kohlenstoff auf. Der hohe Gehalt an freiem Kohlenstoff zeigt, dass der angebotene Kohlenstoff bei den gewählten Carburierungsbedingungen nicht vollständig aufgenommen wurde. Die Anteile der Siebfraktionen zwischen 150 µm und 45 µm änderten sich durch die Behandlung im Vergleich zum Ausgangsmaterial nicht.

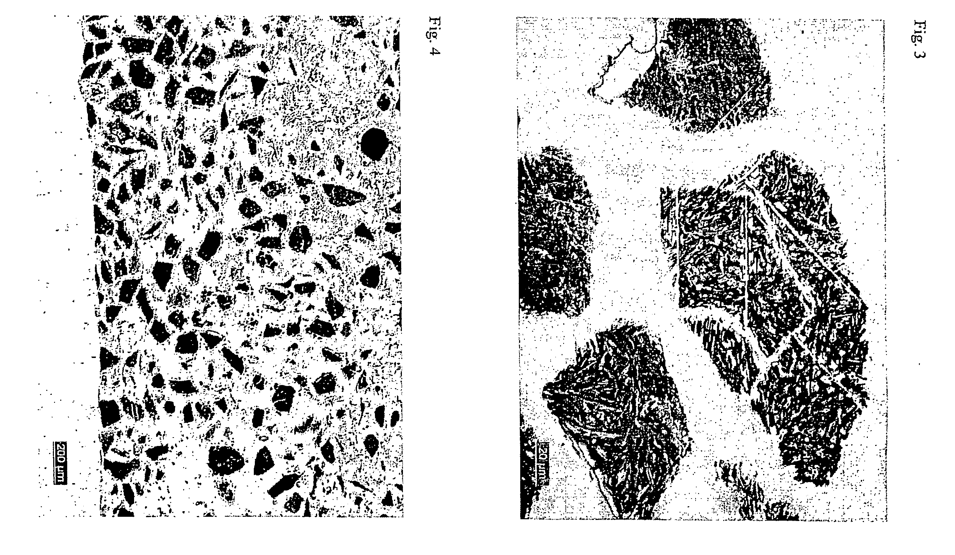

6 kg des so erhaltenen Wolframcarbids wurden mit 4 kg Ni-3B-3Si-Legierung der Körnung -150 +53µm als Matrixmetall versetzt und mittels Plasma Transferred Arc (PTA)-Schweißen mit einem Handbrenner bei 70-80A / ca. 30V ein- und zweilagig auf einem Stahlsubstrat verschweißt. Das Material neigte zur Ausbildung eines unruhigen Schmelzbades sowie zur Spritzerbildung, was auf den hohen Anteil an freiem Kohlenstoff zurückgeführt werden kann. Die Probenkörper wurden im Querschliff im Auflichtmikroskop untersucht. Mikroskopische Aufnahme sind in Fig. 2 (50-fache Vergrößerung) und Fig. 3 (500-fache Vergrößerung) wiedergegeben.

Das bei der Schweißung entstandene Gefüge ist nahezu frei von karbidischen Ausscheidungen. Matrixmetall und Hartstoff bleiben in ihrer ursprünglichen Zusammensetzung erhalten. Insbesondere die zur Atmosphäre gerichtete, thermisch stark beanspruchte Randzone zeigt einen im Vergleich zum mittleren und unteren Bereich der Wärmeeinflusszone unverändert hohen Gehalt an intaktem Hartstoff, wobei eine beträchtliche Anzahl von Partikeln sogar aus der zur Atmosphäre gerichteten Oberfläche herausragt.

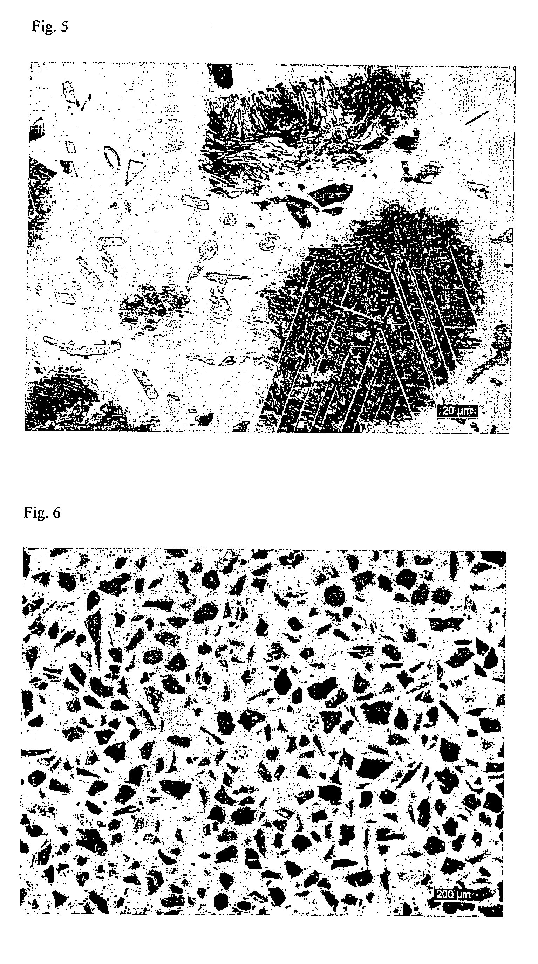

Zum Vergleich wurde das zur Herstellung des erfindungsgemäßen Wolframcarbids eingesetzte WSC unter identischen Bedingungen verschweißt. Das WSC löst sich im äußeren Randbereich bis zu einer Tiefe von 200-500 µm fast vollständig auf. Es kommt zur Ausscheidung feiner Carbide. Die Probenkörper wurden im Querschliff im Auflichtmikroskop untersucht. Mikroskopische Aufnahme sind in Fig. 4 (50-fache Vergrößerung) und Fig. 5 (500-fache Vergrößerung) wiedergegeben. Es sind deutlich die feinen Carbidpartikel zu erkennen.

Mittels quantitativer Bildanalyse wurde festgestellt, dass bei gleicher Menge eingesetzten Hartstoffs die Anzahl an im Verbundwerkstoff eingelagerten Hartstoffpartikeln im Vergleich zum nicht aufgekohlten, bei gleichen Bedingungen verschweißten Referenzmaterial (WSC) um ca. 30 % höher ist.

### Beispiel 2

WSC der Körnung -150 +45µm wurde analog Beispiel 1 mit Ruß umgesetzt. Die Behandlungsdauer betrug jedoch 6h. Es resultierte ein cWSC mit 5,48 Gew.-% gebundenem und 0,06 Gew.-% freiem Kohlenstoff. Die Korngrößenverteilung wurden durch die verlängerte Umsetzungszeit nicht beeinflusst. Das Verhältnis von freiem zu gebundenem Kohlenstoff konnte erwartungsgemäß durch die verlängerte Temperaturbehandlung im Vergleich zu Beispiel 1 gesenkt werden. Analog Beispiel 1 wurden 6 kg cWSC mit 4kg Ni-3B-3 Si-Legierung vermischt und mit einem PTA-Handbrenner verschweißt. Der geringere Gehalt an freiem Kohlenstoff wirkte sich im Vergleich zu Beispiel 1 positiv auf das Schweißverhalten aus. Bei der mikroskopischen Untersuchung der Schweißschicht stellte sich heraus, dass die Anzahl an nicht aufgelösten Wolframcarbidpartikeln um weitere 10 %, d.h. um insgesamt 40 % gegenüber dem nicht aufgekohlten Vergleichsmuster (WSC) gesteigert werden konnte.

### Beispiel 3

WSC der Körnung -150 +45µm wurde analog Beispiel 1 mit Russ umgesetzt. Es wurde jedoch eine geringere Menge Ruß verwendet, so dass der Gesamtkohlenstoffgehalt der Mischung 4,3 Gew.-% betrug. Es resultierte ein cWSC mit 4,3 Gew.-% gebundenem und 0,01 Gew.-% freiem Kohlenstoff. Aufgrund der geringen Menge zugesetzter Kohlenstoffquelle bildete sich nur eine sehr dünne Hülle aus WC aus. Analog Beispiel 1 wurden 6 kg des so erhaltenen Wolframcarbids mit 4 kg Ni-3B-3Si-Legierung vermischt und mit einem PTA-Handbrenner verschweißt. Das Schweißverhalten des Gemisches war vom dem des nicht aufgekohlten Vergleichsmusters (WSC) nicht zu unterscheiden. Bei der mikroskopischen Untersuchung der Schweißschicht stellte sich heraus, dass die Auflösung des Wolframcarbids trotz der sehr dünnen Hülle aus WC weitgehend unterdrückt werden konnte. Es bildete sich gegenüber den Beispielen 1 und 2 jedoch ein deutlich höherer Anteil an Karbiden, die in der metallischen Matrix bei der Abkühlung aus der Schmelze ausgeschieden wurden. Gegenüber dem nicht aufgekohlten Vergleichsmaterial (WSC) wurde eine Steigerung der Anzahl an in der aufgeschweißten Schicht verbliebenen Wolframcarbidpartikeln um ca. 18 % erzielt.

Fig. 6 zeigt im Querschliff eine mikroskopische Aufnahme (50-fache Vergrößerung) des Wolframcarbids nach Verschweißung. Es ist eine geringe Anzahl an feinen Carbidpartikeln zu erkennen.

### Beispiel 4 (Vergleich)

Zum Vergleich wurden 6 kg makrokristallines WC der Körnung -150 +45µm mit 6,1 Gew.-% gebundenem Kohlenstoff analog zu Beispiel 1 mit 4kg einer Ni-3B-3Si-Legierung versetzt und unter den in Beispiel 1 genannten Bedingungen verschweißt. Erwartungsgemäß löste sich das makrokristalline WC bei der Schweißung nicht auf. Der Anteil an Hartstoffpartikeln in der verschweißten Schicht ist um ca. 48 % höher, als bei Einsatz des WSC-Ausgangsmaterials aus Beispiel 1. Die Härte des makrokristallinen WC in der Schweißschicht betrug ca. 1500 HV0,1 und lag damit deutlich niedriger als die Härte des cWSC aus den erfindungsgemäßen Beispielen 1-3, die mit 2200 - 2500 HV0,1 angegeben werden kann. Die mittlere Härte des Matrixmetalls nach der Schweißung lag bei ca. 700 HV0,1.

## Patentansprüche

1. Wolframcarbidpulver, **dadurch gekennzeichnet, dass** die Pulverpartikel einen Kern aus Wolframschmelzcarbid und eine Hülle aus Wolframmonocarbid aufweisen.

2. Wolframcarbidpulver gemäß Anspruch 1, **dadurch gekennzeichnet, dass** der Gehalt an gebundenem Kohlenstoff von 4 bis 6 Gew.-%, vorzugsweise von 4,3 bis 5,5 Gew.-% beträgt.

3. Wolframcarbidpulver gemäß Anspruch 1 oder 2, **dadurch gekennzeichnet, dass** die Partikelgröße bestimmt mittels RoTap-Siebanalyse gemäß ASTM B 214 bis zu 3000 µm beträgt.

4. Wolframcarbidpulver gemäß wenigstens einem der Ansprüche 1 bis 3, **dadurch gekennzeichnet, dass** die Dicke der Hülle aus Wolframmonocarbid das 0,05 bis 0,4-fache der mittleren Partikelgröße beträgt.

5. Wolframcarbidpulver gemäß wenigstens einem der Ansprüche 1 bis 4, **dadurch gekennzeichnet, dass** es eine Härte von > 2000 HV0,1 aufweist.

6. Wolframcarbidpulver gemäß wenigstens einem der Ansprüche 1 bis 5, **dadurch gekennzeichnet, dass** die Pulverpartikel eine scharfkantig gebrochene Morphologie aufweisen.

7. Verfahren zur Herstellung eines Wolframcarbidpulvers nach einem der Ansprüche 1 bis 6, **dadurch gekennzeichnet, dass** Wolframschmelzcarbid-pulver in Gegenwart einer Kohlenstoffquelle auf eine Temperatur von 1300 bis 2000°C, vorzugsweise von 1400 bis 1700°C erhitzt wird.

8. Verfahren gemäß Anspruch 7, **dadurch gekennzeichnet, dass** es sich bei der Kohlenstoff quelle um Russ, Graphit und/oder einen Kohlenwasserstoff handelt.

9. Verfahren nach einem der Ansprüche 7 oder 8, **dadurch gekennzeichnet, dass** die Kohlenstoffquelle in einer solchen Menge zuzugeben wird, dass der Gesamtkohlenstoffgehalt in der Reaktionsmischung 4 bis 6 Gew.-% beträgt.

10. Verwendung eines Wolframcarbidpulvers nach einem der Ansprüche 1 bis 6 zur Oberflächenbeschichtung verschleißbeanspruchter Bauteile.

11. Verwendung eines Wolframcarbidpulvers nach einem der Ansprüche 1 bis 6 zur Herstellung von Bohrkronen.

## Claims

1. A tungsten carbide powder, **characterised in that** the powder particles have a core of cast tungsten carbide and a shell of tungsten monocarbide.

2. A tungsten carbide powder according to claim 1, **characterised in that** the bound carbon content is 4 to 6 wt.%, preferably 4.3 to 5.5 wt.%.

3. A tungsten carbide powder according to claim 1 or 2, **characterised in that** the particle size determined by Ro-Tap sieve analysis in accordance with ASTM B 214 is up to 3000 *µ*m.

4. A tungsten carbide powder according to at least one of claims 1 to 3, **characterised in that** the thickness of the shell of tungsten monocarbide is 0.05 to 0.4 times the average particle size.

5. A tungsten carbide powder according to at least one of claims 1 to 4, **characterised in that** it has a hardness of > 2000 HV0.1.

6. A tungsten carbide powder according to at least one of claims 1. to 5, **characterised in that** the powder particles have a sharp-edged crushed morphology.

7. A process for the production of a tungsten carbide powder according to at least one of claims 1 to 6, **characterised in that** cast tungsten carbide powder is heated in the presence of a carbon source to a temperature of 1300 to 2000°C, preferably 1400 to 1700°C.

8. A process according to claim 7, **characterised in that** the carbon source is carbon black, graphite and/or a hydrocarbon.

9. A process according to one of claims 7 or 8, **characterised in that** the carbon source is added in a quantity such that the total carbon content in the reaction mixture is 4 to 6 wt.%.

10. The use of a tungsten carbide powder according to one of claims 1 to 6 for the surface coating of components subject to wear.

11. The use of a tungsten carbide powder according to one of claims 1 to 6 for the production of drill bits.

## Revendications

1. Poudre de carbure de tungstène, **caractérisée en ce que** les particules de poudre comportent un noyau de carbure de tungstène de fusion et une enveloppe de monocarbure de tungstène.

2. Poudre de carbure de tungstène selon la revendication 1, **caractérisée en ce que** la teneur en carbone lié est de 4 à 6 % en poids, de préférence de 4,3 à 5,5 % en poids.

3. Poudre de carbure de tungstène selon la revendication 1 ou 2, **caractérisée en ce que** la taille des particules, mesurée par analyse par tamisage RoTap d'après la norme ASTM B 214, atteint jusqu'à 3000 µm.

4. Poudre de carbure de tungstène selon l'une au moins des revendications 1 à 3, **caractérisée en ce que** l'épaisseur de l'enveloppe de monocarbure de tungstène est de 0,05 à 0,4 fois la taille moyenne des particules

5. Poudre de carbure de tungstène selon l'une au moins des revendications 1 à 4, **caractérisée en ce qu'**elle présente une dureté de >2000 HV0,1.

6. Poudre de carbure de tungstène selon l'une au moins des revendications 1 à 5, **caractérisée en ce que** les particules de la poudre présentent une morphologie concassée à arêtes vives.

7. Procédé de préparation d'une poudre de carbure de tungstène selon l'une quelconque des revendications 1 à 6, **caractérisé en ce que** de la poudre de carbure de tungstène de fusion est chauffée à une température de 1300 à 2000 °C, de préférence de 1400 à 1700 °C en présence d'une source de carbone.

8. Procédé selon la revendication 7, **caractérisé en ce qu'**en matière de source de carbone, il s'agit de noir de fumée, de graphite et/ou d'un hydrocarbure.

9. Procédé selon la revendication 7 ou 8, **caractérisé en ce que** la source de carbone est ajoutée en une quantité telle que la teneur totale de carbone dans le mélange réactionnel est de 4 à 6 % en poids.

10. Utilisation d'une poudre de carbure de tungstène selon l'une des revendications 1 à 6 pour le placage superficiel de pièces sollicitées à l'usure.

11. Utilisation d'une poudre de carbure de tungstène selon l'une des revendications 1 à 6 pour la fabrication de couronnes de perçage.
